# EUROPEAN PATENT SPECIFICATION

(11) **EP 3 690 577 B1**
(45) Date of publication and mention of the grant of the patent: **29.09.2021**
(21) Application number: 20154117.4
(22) Date of filing: 28.01.2020
(51) Int. Cl.: G05B 19/418

(54) **MANAGEMENT SYSTEM AND MANAGEMENT METHOD FOR CUTTING MACHINE**
VERWALTUNGSSYSTEM UND VERWALTUNGSVERFAHREN FÜR EINE SCHNEIDEMASCHINE
SYSTÈME ET PROCÉDÉ DE GESTION DE MACHINE DE COUPE

(30) Priority: 31.01.2019 JP 2019016065
(43) Date of publication of application: 05.08.2020
(73) Proprietor: DGSHAPE Corporation, Hamamatsu-shi, Shizuoka 431-2103 (JP)
(72) Inventor: YOSHIOKA, Shiro, Hamamatsu-shi, Shizuoka 431-2103 (JP)
(74) Representative: Grünecker Patent- und Rechtsanwälte PartG mbB

(56) References cited:
- EP-A1- 2 874 035
- EP-A1- 3 416 004
- US-A1- 2015 205 288
- US-A1- 2018 059 652

## Description

### Field of the Invention

The present teaching relates to a management system and to a management method for a cutting machine.

Cutting machines for producing artificial teeth and other products by cutting have been known to date. For example, JP2017-94436A discloses a cutting machine including a retainer for retaining a workpiece, a spindle for rotating a processing tool, and a mechanism for moving the retainer and the spindle in parallel in three dimensions.

A so-called Internet of Things (IoT) technique has also been known to date. The IoT technique provides not only information communication equipment but also various types of equipment with communication functions and connects the equipment to the Internet, thereby remotely controlling the equipment and managing operations of the equipment.

To perform an IoT technique with a cutting machine, it is possible to provide the cutting machine with the function of connecting to a network such as the Internet. However, there are a large number of existing cutting machines having no function of connecting to a network, and a large number of cutting machines having no network connecting function for the purpose of avoiding a cost increase have been manufactured. A large number of such cutting machines have been out of a target of management using a network. However, management of a cutting machine using a network has advantages, such as remote operation and remote monitoring. It is very useful to manage cutting machines having no network connecting function by using networks.
US 2018/0059652 A1 describes module architecture for implementing commands in a welding or cutting system. A master node includes all modules for implementing a welding or cutting. The master node may be connected to a plurality of slave nodes representing non-welding or cutting peripherals like user interface panels, wire feeders, power sources etc. In a distributed system of a plurality of welding or cutting systems one device being the client device and the other the master device.

EP3416004A1 describes a control of field devices installed in a factory by a central management apparatus. The central management apparatus includes a management application (FDT) and device controllers (DTM). The DTMs respectively manage the field devices in the factory while the FDT manages the DTMs and provides the user with an interface for enabling them to operate the DTMs. For this purpose, the FTM includes a device identifier acquirer which acquires form each of the DTMs a device identifier which identify the filed devices. Based on the acquired device identifier a device management screen is generated and displayed for providing data obtained from the respective filed device to the user.

The present teaching has been made in in view of the foregoing situations, and has an object of providing a management system and method for a cutting machine capable of managing even a cutting machine having no network connecting function by using a network.

This is achieved by the features of the independent claim 1.

In the management system and management method for the cutting machines, each cutting machine connected to the intermediary device is identified by the identifier generated by the intermediary device, and thus, the interposition of the intermediary device provides similar advantages as including an address on the network. Thus, as long as an instruction specifying an identifier, even an instruction issued to the server device from an operation terminal connected to the network can be transmitted to a specified cutting machine through the server device and the intermediary device connected to the server device through the network. The system described above can manage even cutting machines having no network connecting function by using a network.

### BRIEF DESCRIPTION OF THE DRAWINGS

FIG. 1 schematically illustrates a management system for a cutting machine according to one preferred embodiment.
FIG. 2 is a perspective view illustrating an example of a cutting machine.
FIG. 3 is a vertical cross-sectional view of the cutting machine.
FIG. 4A and 4B are block diagrams of the management system.
FIG. 5 schematically illustrates a process for registering identification IDs of cutting machines.
FIG. 6 schematically illustrates a process for sending error information of a cutting machine to an operation terminal.
FIG. 7 schematically illustrates a process of remote control of a shooting system.
FIG. 8 schematically illustrates a process of remote control of a cutting machine.

### DETAILED DESCRIPTION OF THE PREFERRED EMBODIMENTS

A management system and a corresponding management method for a cutting machine according to a preferred embodiment of the present teaching will be described hereinafter with reference to the drawings. The preferred embodiment described here is, of course, not intended to particularly limit the present teaching. Elements and features having the same functions are denoted by the same reference numerals, and description for the same members and parts will not be repeated or will be simplified as appropriate.

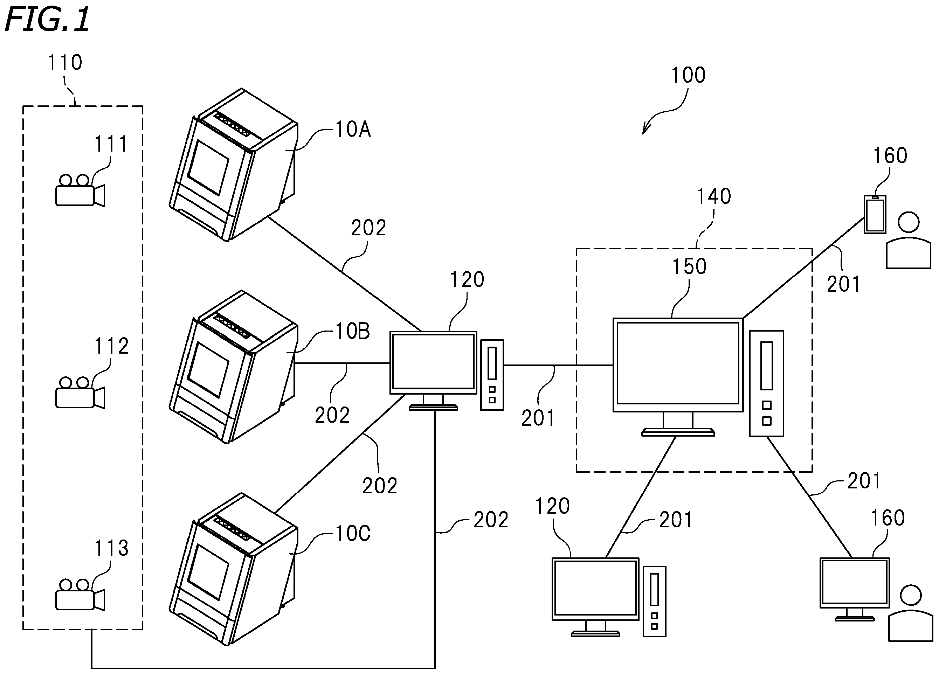

FIG. 1 schematically illustrates a management system 100 for a cutting machine according to one preferred embodiment (hereinafter referred to as a management system 100). As illustrated in FIG. 1, the management system 100 according to this preferred embodiment includes a server device 150, an intermediary computer 120, and a shooting system 110. The intermediary computer 120 is connected to a server device 150 through the Internet 201. A plurality of cutting machines 10A, 10B, and 10C are connected to the intermediary computer 120. The tree cutting machines 10A through 10C are directly connected to the intermediary computer 120 by USB cables 202. One or four or more cutting machines may be connected to the intermediary computer 120. The shooting system 110 is also directly connected to the intermediary computer 120.

As illustrated in FIG. 1, a plurality of intermediary computers 120 may be connected to the server device 150. One or more cutting machines are connected to each intermediary computer 120. Some intermediary computers 120 may not be connected to the shooting system 110.

The server device 150 in this preferred embodiment is a server in a cloud computing system 140, and is connected to the Internet 201. The server device 150 is configured to be connectable to a plurality of operation terminals 160 through the Internet. Although FIG. 1 illustrates an example state in which the plurality of operation terminals 160 are connected to the server device 150, the operation terminals 160 do not need to be always connected to the server device 150. The operation terminals 160 only need to be connected to necessary components when necessary. The operation terminals 160 are, for example, computers and/or smartphones. The server device 150 and the operation terminals 160 are connected to each other through the Internet 201. The Internet 201 may be constituted by wires or wirelessly.

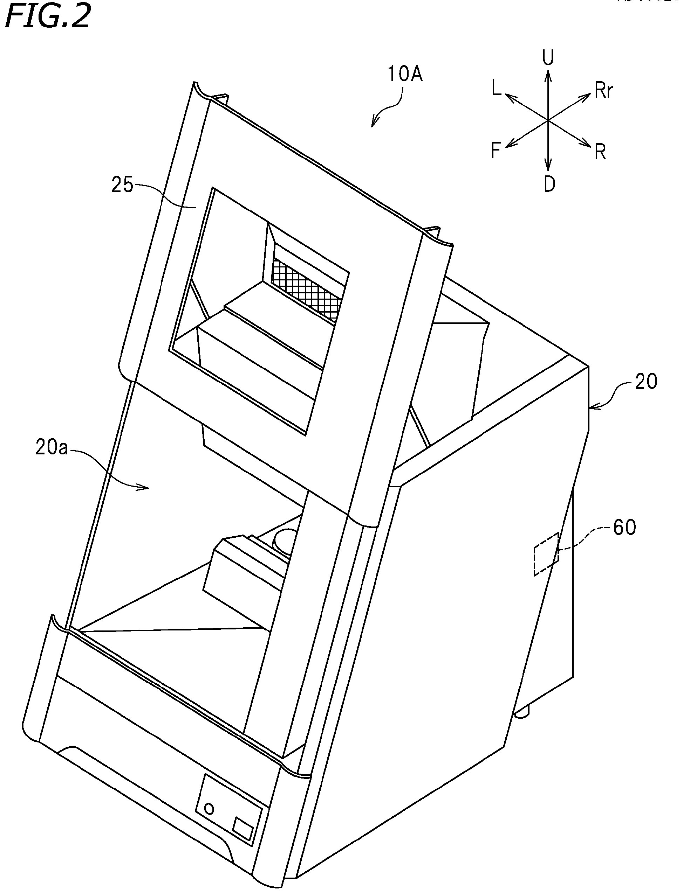

FIG. 2 is a perspective view illustrating an example of a first cutting machine 10A. FIG. 2 illustrates the first cutting machine 10A in a state where a door 25 is open. In the following description, left, right, upward, and downward will be referred to as left, right, upward, and downward, respectively, when seen from a user at the door 25 of the first cutting machine 10A. A direction toward the first cutting machine 10A from the user will be referred to as rear, and a direction away from the first cutting machine 10A will be referred to as front. Characters F, Rr, L, R, U, and D in the drawings represent front, rear, left, right, upward, and downward, respectively.

As illustrated in FIG. 2, the first cutting machine 10A has a box shape. In this preferred embodiment, the first cutting machine 10A includes a chassis 20 and the door 25. The chassis 20 has a box shape having an opening at the front. The opening at the front of the chassis 20 is provided with the door 25. The door 25 can be opened and closed. The door 25 is vertically slidably attached to the chassis 20. The vertical sliding of the door 25 enables the inside and the outside of the chassis 20 to communicate with each other through the opening at the front of the chassis 20.

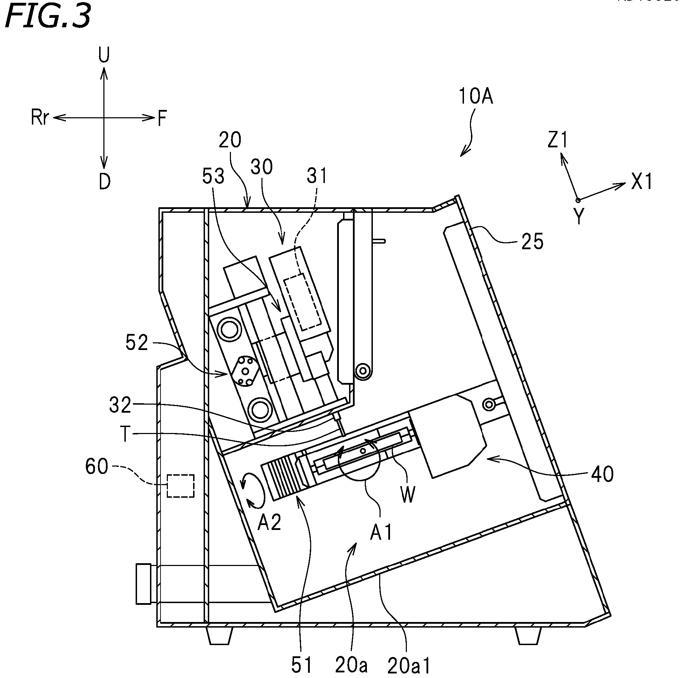

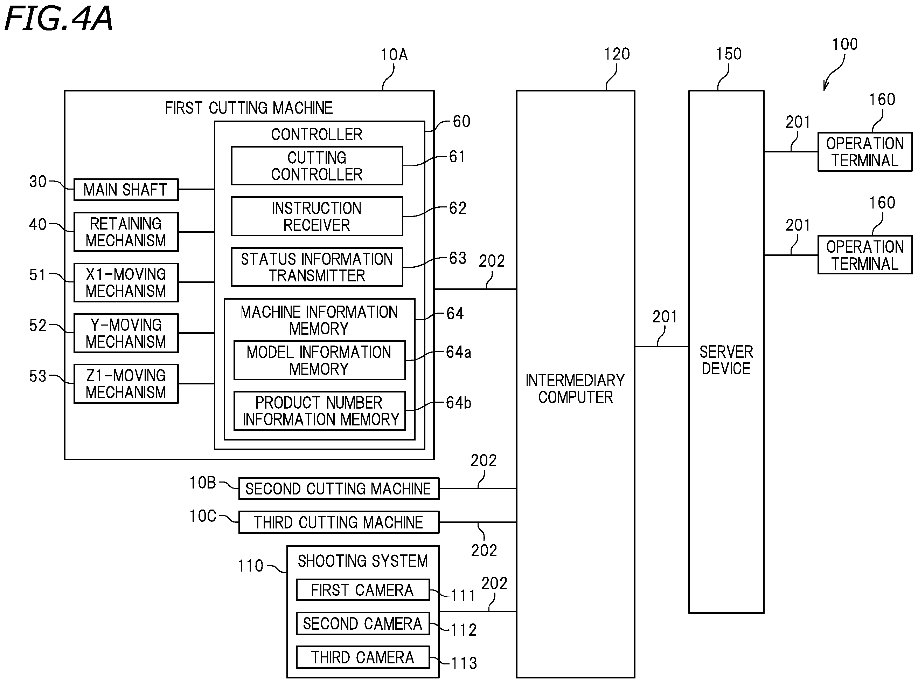

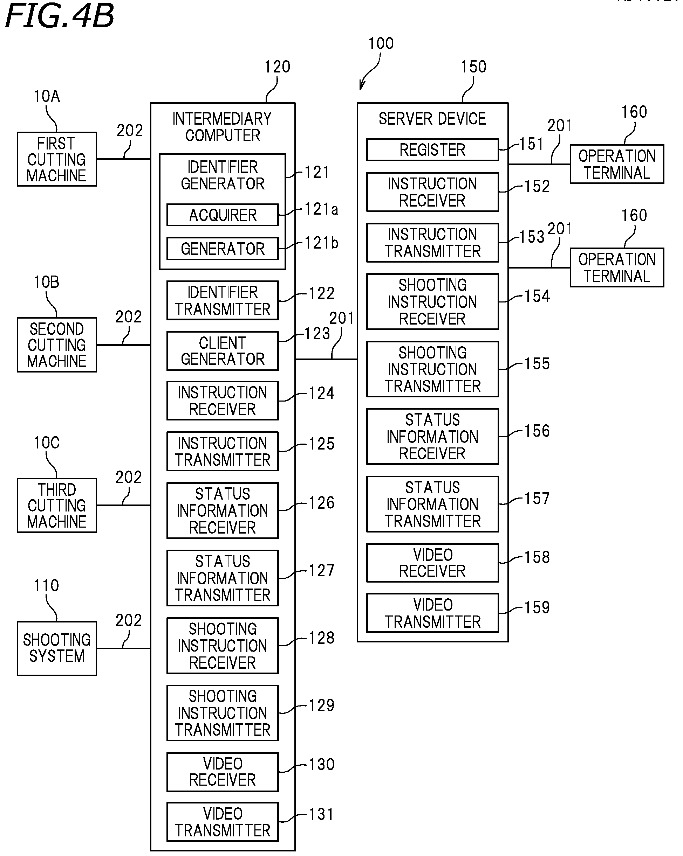

FIG. 3 is a vertical cross-sectional view of the first cutting machine 10A. As illustrated in FIG. 3, a floor surface 20a1 of a processing space 20a on which a cutting workpiece W is processed inside the chassis 20 is declined rearward. A main shaft 30 for rotating a tool T is tilted to be perpendicular to the floor surface 20a1 of the processing space 20a. In the following description, the front-rear direction of the floor surface 20a1 of the processing space 20a will be referred to as a direction X1, and a direction in which the main shaft 30 extends will be referred to as a direction Z1. The left-right direction of the first cutting machine 10A will be referred to as a direction Y. In the processing space 20a of the chassis 20, the main shaft 30, a retaining mechanism 40, an Xl-moving mechanism 51, a Y-moving mechanism 52 (see FIG. 4A and 4B), and a Zl-moving mechanism 53 are disposed.

The main shaft 30 holds the tool T and rotates the tool T. As illustrated in FIG. 3, the main shaft 30 includes a driver 31 and a holder 32. The holder 32 holds the tool T at the tip of the main shaft 30. The driver 31 rotates the tool T held by the holder 32, together with the holder 32.

The retaining mechanism 40 is configured to retain the cutting workpiece W. The cutting workpiece W is, for example, a material for artificial teeth. The retaining mechanism 40 retains the cutting workpiece W, and rotates the cutting workpiece W in directions A1 and A2 in FIG. 3. This rotation can change the posture of the cutting workpiece W relative to the tool T variously.

The main shaft 30 is moved in directions Y and Z1 by the Y-moving mechanism 52 and the Zl-moving mechanism 53. The tool T retained by the main shaft 30 moves in the directions Y and Z1 together with the main shaft 30. The retaining mechanism 40 is moved in the direction X1 by the Xl-moving mechanism 51. The cutting workpiece W retained by the retaining mechanism 40 moves in the direction X1 together with the retaining mechanism 40. Accordingly, a positional relationship between the tool T and the cutting workpiece W in three dimensions can be changed from moment to moment.

As illustrated in FIG. 2, the first cutting machine 10A includes a controller 60. FIG. 4A and 4B are block diagrams of the management system 100 according to this preferred embodiment. As illustrated in FIG. 4A and 4B, the controller 60 is connected to the main shaft 30, the retaining mechanism 40, the Xl-moving mechanism 51, the Y-moving mechanism 52, and the Zl-moving mechanism 53.

The controller 60 is not limited to a specific configuration. The controller 60 is, for example, a microcomputer. The microcomputer is not limited to specific hardware configuration, but includes, for example, an interface (I/F) for receiving cutting data or other data from external equipment such as a host computer, a central processing unit (CPU) for executing an instruction of a control program, a read only memory (ROM) storing a program to be executed by the CPU, a random access memory (RAM) used as a working area where a program is to be developed, and a storage device, such as a memory, for storing the programs and the various types of data described above. All the functions of components of the controller 60 do not need to be implemented by hardware disposed inside the chassis 20, and a computer or another component connected to the controller 60 may implement some of the functions.

As illustrated in FIG. 4A and 4B, the controller 60 includes a cutting controller 61, an instruction receiver 62, a status information transmitter 63, and a machine information memory 64. The controller 60 may include other processors, but description thereof will be omitted.

The cutting controller 61 controls the main shaft 30, the retaining mechanism 40, the Xl-moving mechanism 51, the Y-moving mechanism 52, and the Zl-moving mechanism 53 to perform a cutting process on the cutting workpiece W.

The instruction receiver 62 is configured to receive an instruction from external equipment and cause the cutting controller 61, for example, to execute the instruction. In this preferred embodiment, the first cutting machine 10A is connected to the intermediary computer 120, and the instruction receiver 62 receives instructions from the intermediary computer 120. Examples of the instructions from the intermediary computer 120 include instructions for starting, suspending, skipping, and stopping a cutting process, an instruction for sending status information, and an instruction for transmitting machine information.

The status information transmitter 63 transmits status information of the first cutting machine 10A. In this preferred embodiment, the status information transmitter 63 transmits status information to the intermediary computer 120. The status information includes, for example, information concerning a progress of a cutting process and error information.

The machine information memory 64 stores information concerning the first cutting machine 10A itself. The machine information memory 64 includes a model information memory 64a and a product number information memory 64b, and stores model information and product number information. The model information memory 64a stores model information of the first cutting machine 10A. The model information is constituted by characters representing a type of the first cutting machine 10A, for example. The product number information memory 64b stores product number information of the first cutting machine 10A. The product number information is, for example, a serial number of the first cutting machine 10A.

The first cutting machine 10A in this preferred embodiment is a cutting machine that does not have the function of enabling internet connection. The management system 100 for the cutting machines according to this preferred embodiment also enables an operation of a cutting machine not having the function of Internet connection, such as the first cutting machine 10A, through the Internet. It should be noted that the first cutting machine 10A may have the internet connection function.

The second cutting machine 10B and the third cutting machine 10C may have cutting machines of the same model as the first cutting machine 10A, or may be cutting machines of models different from the first cutting machine 10A. The second cutting machine 10B and the third cutting machine 10C also need to store model information and product number information, and the intermediary computer 120 needs to be capable of reading the model information and the product number information. The configuration of the first cutting machine 10A described above is merely an example, and is not intended to limit the type of the cutting machines.

The shooting system 110 is configured to enable shooting of images of the cutting machines 10A through 10C. The shooting system 110 in this preferred embodiment is directly connected to the intermediary computer 120 by the USB cable 202. The shooting system 110 captures images of the cutting machines 10A through 10C based on an instruction of the intermediary computer 120. The shooting system 110 includes a first camera 111, a second camera 112, and a third camera 113.

The first camera 111 is disposed to capture an image of the first cutting machine 10A. The first camera 111 is configured to capture a moving image in the processing space 20a of the first cutting machine 10A, for example. Objects to be captured by the first camera 111 are not limited to the example above. For example, the first camera 111 may capture an appearance of the first cutting machine 10A.

The second camera 112 captures an image of the second cutting machine 10B based on an instruction of the intermediary computer 120. The third camera 113 captures an image of the third cutting machine 10C based on an instruction of the intermediary computer 120. In the shooting system 110, however, one camera does not need to be provided to one cutting machine. For example, the shooting system 110 may include cameras in a number smaller than the number of cutting machines, and may capture an image of a specified cutting machine by moving or rotating the cameras. The cameras may be incorporated in the cutting machines.

The intermediary computer 120 is a computer to which the plurality of cutting machines 10A through 10C are directly connected, and performs transfer between the server device 150 and each of the plurality of cutting machines 10A through 10C. The intermediary computer 120 in this preferred embodiment is a general computer on which software for implementing functions is mounted. An intermediary device exemplified by the intermediary computer 120 of the preferred embodiment may not be a general computer, and may be dedicated hardware.

As shown in FIG. 4A and 4B, the intermediary computer 120 includes an identifier generator 121, an identifier transmitter 122, a client generator 123, an instruction receiver 124, an instruction transmitter 125, a status information receiver 126, a status information transmitter 127, a shooting instruction receiver 128, a shooting instruction transmitter 129, a video receiver 130, and a video transmitter 131.

The identifier generator 121 acquires machine information from each cutting machine connected to the intermediary computer 120, and based on the acquired machine information, generates an identification ID of the connected cutting machine. In the example configuration of FIG. 1, the identifier generator 121 generates an identification ID of the first cutting machine 10A, an identification ID of the second cutting machine 10B, and an identification ID of the third cutting machine 10C.

The identifier generator 121 generates identification IDs based on the machine information of the cutting machines. The identifier generator 121 includes an acquirer 121a and a generator 121b. The acquirer 121a acquires model information and product number information from each of the cutting machines 10A through 10C. The generator 121b generates identification IDs of the cutting machines 10A through 10C based on the model information and the product number information acquired by the acquirer 121a. The generator 121b generates, for example, characters serially representing a type and a serial number of a connected cutting machine, as an identification ID of this cutting machine. Such identification IDs can uniquely identify all the cutting machines. The method for generating identification IDs described above is an example, and is not intended to limit the present teaching.

The identifier transmitter 122 transmits the identification IDs generated by the identifier generator 121 to the server device 150. Although specifically described later, the identification IDs generated by the identifier generator 121 are recorded in the server device 150. Thus, even when the cutting machine is not present any more, the identification IDs remain and are stored in the server device 150.

The client generator 123 recognizes the connected cutting machines, and generates a client to communicate with the server device 150 for each connected cutting machine. The client in this preferred embodiment is an imaginary intermediator that is linked to each of the identification IDs of the cutting machines 10A through 10C and used for transmission between the server device 150 and the cutting machines 10A through 10C. When an instruction specifying the identification ID of one cutting machine is issued from the operation terminal 160 through the server device 150, only the client of the cutting machine corresponding to this specification processes this instruction. Accordingly, the intermediary computer 120 performs transfer between the cutting machines 10A through 10C and the server device 150. The instruction receiver 124, the instruction transmitter 125, the status information receiver 126, the status information transmitter 127, the shooting instruction receiver 128, the shooting instruction transmitter 129, the video receiver 130, and the video transmitter 131 are provided in the client of each of the plurality of cutting machines 10A through 10C, and processes an instruction and information. Each client includes the instruction receiver 124, the instruction transmitter 125, the status information receiver 126, the status information transmitter 127, the shooting instruction receiver 128, the shooting instruction transmitter 129, the video receiver 130, and the video transmitter 131. Every when the cutting machine is connected to the intermediary computer 120, the client generator 123 generates a client of this connected cutting machine.

The instruction receiver 124 receives an instruction from the server device 150. Examples of instructions from the server device 150 include start and stop instructions of a cutting process. The instruction from the server device 150 specifies the identification ID of the target cutting machine. The instruction transmitter 125 transmits an instruction received by the instruction receiver 124 to the cutting machine. At this time, the instruction transmitter 125 transmits an instruction to the client corresponding to the identification ID specified in the instruction received by the instruction receiver 124. Since the client in the intermediary computer 120 corresponds to the cutting machine in a one-to-one relationship, the instruction transmitter 125 transmits an instruction to the cutting machine corresponding to the identification ID specified in the instruction received by the instruction receiver 124. For example, in a case where the first cutting machine 10A is specified in the instruction received by the instruction receiver 124, the instruction transmitter 125 transmits this instruction to the first cutting machine 10A. Similarly, information such as status information is transmitted and received through the client.

The status information receiver 126 receives status information from each of the cutting machines 10A through 10C. The status information may be actively transmitted from the cutting machines 10A through 10C, or may be transmitted in response to a transmission instruction of the intermediary computer 120. The status information transmitter 127 transmits status information on the cutting machines 10A through 10C to the server device 150. At this time, the status information transmitter 127 adds information on an identification ID of the cutting machine, to the status information. The transmitted status information includes information on the identification ID.

The shooting instruction receiver 128 receives a shooting instruction from the server device 150. The shooting instruction from the server device 150 specifies an identification ID of a cutting machine whose image is to be captured. The shooting instruction transmitter 129 transmits the instruction received by the shooting instruction receiver 128 to the shooting system 110. The shooting system 110 captures an image of the cutting machine specified in this shooting instruction.

The video receiver 130 receives data of the captured image from the shooting system 110. The video transmitter 131 transmits the image data transmitted from the shooting system 110 to the server device 150. At this time, the video transmitter 131 adds information on an identification ID of the cutting machine to the image data. The image data to be transmitted includes information on the identification ID.

As shown in FIG. 4A and 4B, the server device 150 is connected to the intermediary computer 120 through the Internet. The server device 150 is a computer accessed by an administrator who manages the cutting machines 10A through 10C. The administrator accesses the server device 150 by using the operation terminals 160 capable of connecting the server device 150 through the Internet. The operation terminals 160 may be, for example, a computer at a remote location from the cutting machines 10A through 10C or may be a portable communication device.

As shown in FIG. 4A and 4B, the server device 150 includes a register 151, an instruction receiver 152, an instruction transmitter 153, a shooting instruction receiver 154, a shooting instruction transmitter 155, a status information receiver 156, a status information transmitter 157, a video receiver 158, and a video transmitter 159.

The register 151 is configured to register an identification ID transmitted by the identifier transmitter 122 of the intermediary computer 120. Identification IDs that have been already registered are not registered again. For example, in a case where a cutting machine connected to the intermediary computer 120 is disconnected from the intermediary computer 120 and then connected again, since the identification ID of this cutting machine has been registered, this identification ID is not registered again.

The instruction receiver 152 receives an instruction specifying the identification ID of the cutting machine from the connected operation terminals 160. The instruction receiver 152 accepts the instruction if the identification ID specified by the operation terminal 160 coincides with one of identification IDs registered in the register 151. A method for providing such a limitation is not specifically limited. Identification IDs registered in the operation terminal 160 may be displayed so that the administrator can select the displayed identification IDs, for example. The instruction transmitter 153 transmits an instruction received by the instruction receiver 152 from the operation terminals 160, to the intermediary computer 120.

The shooting instruction receiver 154 receives a shooting instruction from the operation terminal 160 connected to the server device 150. The shooting instruction from the operation terminal 160 specifies the identification ID of the cutting machine. The shooting instruction is an instruction for capturing an image of the cutting machine corresponding to the specified identification ID. The shooting instruction transmitter 155 transmits the shooting instruction received by the shooting instruction receiver 154 to the client in the intermediary computer 120.

The status information receiver 156 receives status information of the cutting machines 10A through 10C from the intermediary computer 120. The status information may be actively transmitted from the intermediary computer 120, or may be transmitted in response to a transmission instruction of the server device 150. The status information transmitter 157 transmits the status information of the cutting machines 10A through 10C to the operation terminal 160, in response to a transmission instruction from the operation terminals 160 or at any time. The transmitted status information includes information on the identification IDs.

The video receiver 158 receives data of an image captured by the shooting system 110, from the intermediary computer 120. The video transmitter 159 transmits the image data from the intermediary computer 120 to the operation terminal 160. The image data to be transmitted includes information on identification IDs.

It will now be described how the identification ID is registered when the first cutting machine 10A is first connected to the intermediary computer 120. Then, an operation of the management system 100 according to this preferred embodiment will be described, using, as an example, a case where error information on the first cutting machine 10A is transmitted to the operation terminals 160, and in response to this, the administrator instructs video shooting and skipping of a process.

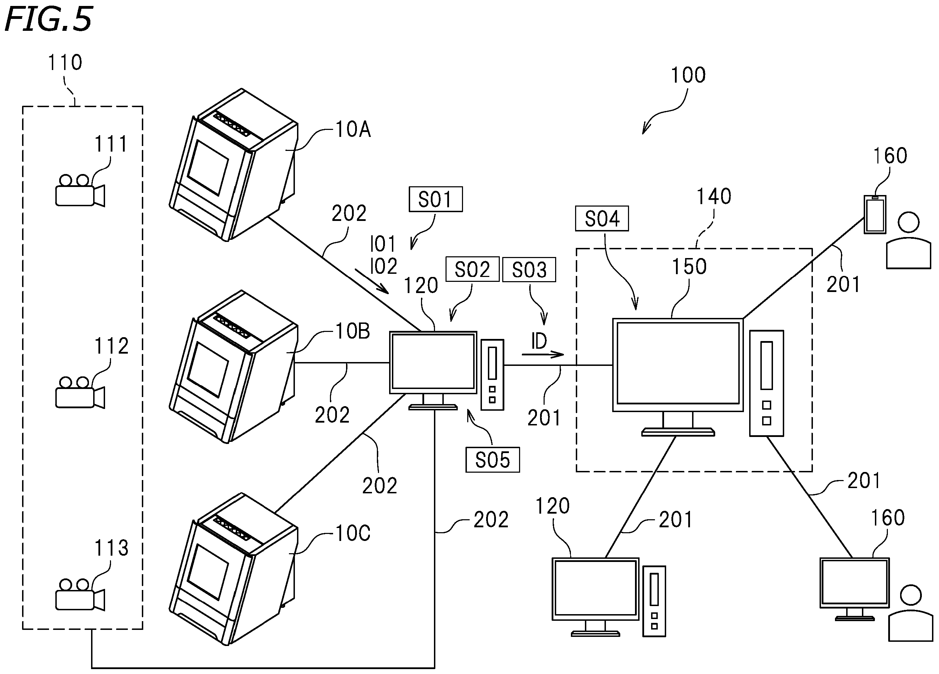

FIG. 5 schematically illustrates a process for registering the identification ID of the first cutting machine 10A. As illustrated in FIG. 5, when the first cutting machine 10A is first connected to the intermediary computer 120, the intermediary computer 120 acquires model information I01 and product number information 102 of the first cutting machine 10A in step S01. In step S02, the intermediary computer 120 generates an identification ID of the first cutting machine 10A. This identification ID is generated based on the model information I01 and the product number information 102 of the first cutting machine 10A. In this preferred embodiment, the intermediary computer 120 generates characters serially representing a type and a serial number of the first cutting machine 10A, as the identification ID of the first cutting machine 10A.

In subsequent step S03, the identification ID of the first cutting machine 10A (represented as an ID in FIG. 5) is transmitted to the server device 150. The identification ID is transmitted through the Internet 201. In step S04, the server device 150 registers the identification ID of the first cutting machine 10A transmitted from the intermediary computer 120. In this example, since the first cutting machine 10A is first connected to the intermediary computer 120, the identification ID of the first cutting machine 10A has not been registered in the server device 150. On the other hand, if the identification ID of the first cutting machine 10A has been registered, step S04 is skipped. Specifically, even in a case where the first cutting machine 10A is connected to another intermediary computer 120 after the registration, the identification ID of the first cutting machine 10A has been registered in the server device 150, and thus, step S04 is skipped.

In step S05, a client for recognizing the first cutting machine 10A and causing the server device 150 and the first cutting machine 10A to communicate with each other is generated in the intermediary computer 120. When an instruction specifying the first cutting machine 10A is transmitted from the operation terminals 160 through the server device 150, only the client of the first cutting machine 10A processes this instruction. Accordingly, the intermediary computer 120 performs transfer between the first cutting machine 10A and the server device 150. The client is generated every when the intermediary computer 120 is connected to the cutting machine. Thus, even when the intermediary computer 120 is updated, the updated intermediary computer 120 does not need to be set again.

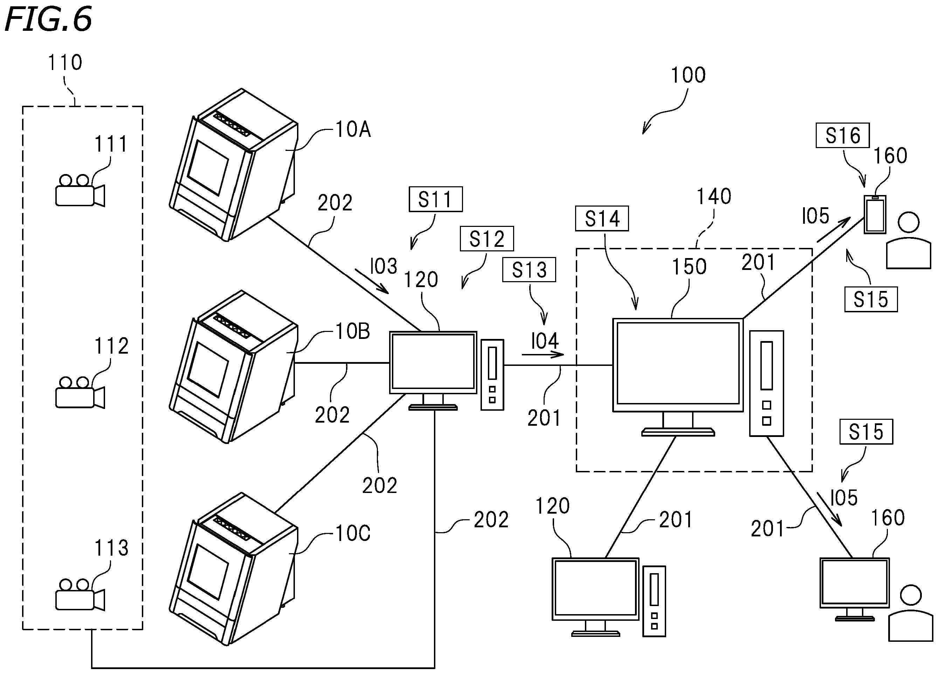

Next, an operation of the management system 100 according to this preferred embodiment will be described, using, as an example, a case where error information on the first cutting machine 10A is transmitted to the operation terminals 160, and in response to this, the administrator instructs video shooting and skipping of a process. FIG. 6 schematically illustrates a process for sending error information of the first cutting machine 10A to the operation terminal 160. The error information is one type of status information. In step S11, a trouble occurs in the first cutting machine 10A during a cutting process, and the first cutting machine 10A issues an error. As illustrated in FIG. 6, the first cutting machine 10A transmits error information 103 to the intermediary computer 120. The error information 103 is transmitted through the USB cable 202. In another case, in response to a transmission instruction from the intermediary computer 120, the error information 103 is transmitted to the intermediary computer 120. In step S12, the error information 103 is received by the intermediary computer 120.

In step S13, information 104 to which information on the identification ID of the first cutting machine 10A is added to error information is transmitted to the server device 150. The information 104 is transmitted through the Internet 201. In step S14, the server device 150 receives the information 104. In step S15, the server device 150 transmits information I05 indicating an error of the first cutting machine 10A to the operation terminals 160. The information I05 is also transmitted through the Internet 201. In step S16, the error information I05 is received by the operation terminals 160. Accordingly, the administrator is capable of knowing occurrence of an error in the first cutting machine 10A during a cutting process and the type of the error.

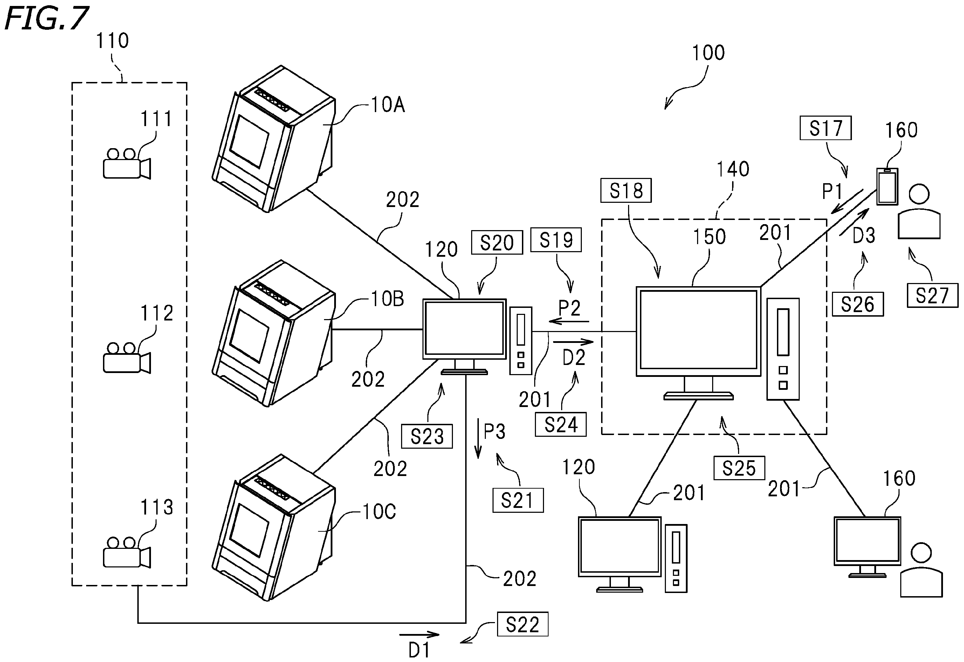

FIG. 7 schematically illustrates a process of remote control of the shooting system 110. In the step illustrated in FIG. 7, in response to a request of the administrator, an image of the first cutting machine 10A is transmitted to the administrator. As illustrated in FIG. 7, in step S17, the administrator issues a shooting instruction P1 of capturing an image of the first cutting machine 10A through the operation terminal 160. In step S17, the shooting instruction P1 specifying the identification ID of the first cutting machine 10A is transmitted from the operation terminal 160 to the server device 150. The shooting instruction P1 is transmitted through the Internet 201.

In step S18, the shooting instruction P1 is received by the server device 150. In response to the instruction, in step S19, the server device 150 transmits a shooting instruction P2 specifying the identification ID of the first cutting machine 10A to the intermediary computer 120. The shooting instruction P2 is transmitted through the Internet 201. In step S20, the shooting instruction P2 is received by the intermediary computer 120. In step S21, the intermediary computer 120 transmits a shooting instruction P3 of instructing capturing of an image of the first cutting machine 10A, to the shooting system 110. More specifically, the shooting instruction P3 is an instruction of instructing the first camera 111 to capture an image. The shooting instruction P3 is transmitted through the USB cable 202.

Data D1 of an image (moving image in this preferred embodiment) captured by the shooting system 110 is transmitted to the intermediary computer 120 (step S22). The data D1 is received by the intermediary computer 120 in step S23. The image data D1 is transmitted through the USB cable 202. In next step S24, the intermediary computer 120 transmits, to the server device 150, image data D2 in which information on the identification ID of the first cutting machine 10A is added to the image data D1. The image data D2 is transmitted through the Internet 201. In step S25, the server device 150 receives the image data D2. In step S26, the server device 150 transmits image data D3 to the operation terminal 160. Alternatively, for example, the image data D3 may be stored in the server device 150, and an URL or the like for accessing the image data D3 may be transmitted to the operation terminal 160. In step S27, the operation terminal 160 receives the image data D3. The image data D3 is transmitted through the Internet 201. Accordingly, the administrator can determine the state of the first cutting machine 10A through the image.

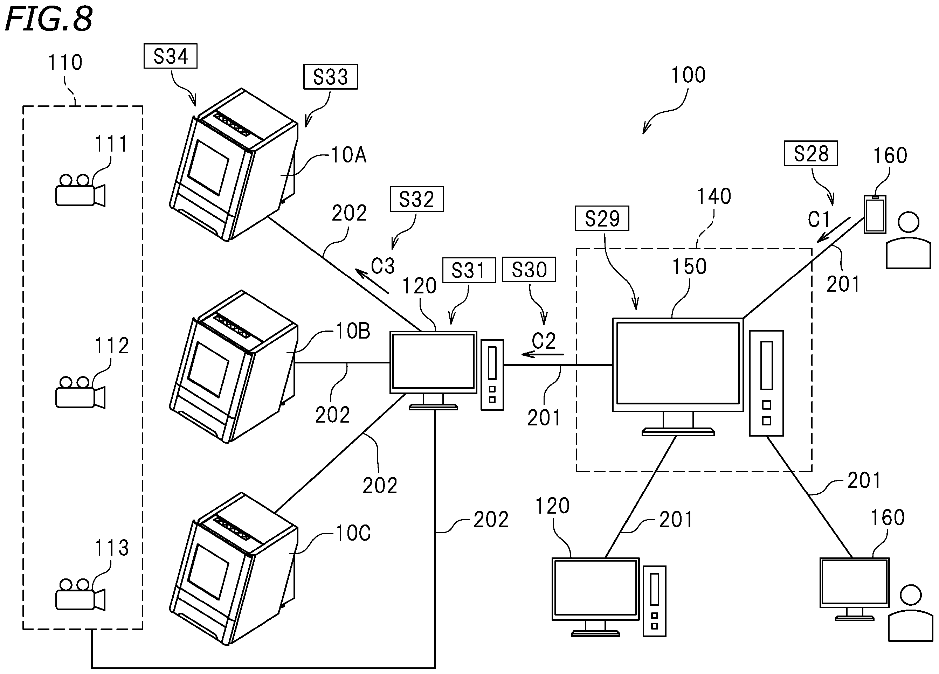

FIG. 8 schematically illustrates a process of remote control of the first cutting machine 10A. In the step illustrated in FIG. 8, the administrator issues an instruction of skipping the process performed by the first cutting machine 10A and shifting to the next step. In response to this instruction, the first cutting machine 10A skips the process under execution. As illustrated in FIG. 8, in step S28, the administrator issues a skip instruction C1 through the operation terminal 160. In step S28, the skip instruction C1 specifying the identification ID of the first cutting machine 10A is transmitted from the operation terminal 160 to the server device 150. The skip instruction C1 is transmitted through the Internet 201.

In step S29, the skip instruction C1 is received by the server device 150. In response to this instruction, in step S30, the server device 150 transmits a skip instruction C2 specifying the identification ID of the first cutting machine 10A to the intermediary computer 120. The skip instruction C2 is transmitted through the Internet 201. In step S31, the intermediary computer 120 receives the skip instruction C2. In next step S32, the intermediary computer 120 transmits a skip instruction C3 to the first cutting machine 10A specified by the identification ID. The skip instruction C3 is transmitted through the USB cable 202. In step S33, the first cutting machine 10A receives the skip instruction C3. Thereafter, in step S34, the first cutting machine 10A skips a process under execution, in accordance with an instruction from the administrator.

Although not specifically described and not shown, status information indicating that the first cutting machine 10A has skipped a process may be then transmitted to the operation terminals 160. An image of the first cutting machine 10A captured by the shooting system 110 may be transmitted while the process is skipped.

As described above, the management system 100 for a cutting machine according to this preferred embodiment includes the server device 150 configured to be connectable to the one or more operation terminals 160 through a network, and the intermediary computer 120 connected to the server device 150 through the network and directly connected to one or more cutting machines (the plurality of cutting machines 10A through 10C in this preferred embodiment). The intermediary computer 120 includes the identifier generator 121, the instruction receiver 124, and the instruction transmitter 125. The identifier generator 121 acquires machine information from each of the connected cutting machines 10A through 10C, and based on the acquired machine information, generates identification IDs of the connected cutting machines 10A through 10C. The instruction receiver 124 of the intermediary computer 120 receives an instruction from the server device 150. The instruction transmitter 125 of the intermediary computer 120 transmits the instruction received by the instruction receiver 124, to the cutting machines 10A through 10C. At this time, the instruction transmitter 125 of the intermediary computer 120 transmits an instruction to the cutting machine corresponding to the identification ID specified in the instruction received by the instruction receiver 124. The server device 150 includes the instruction receiver 152 and the instruction transmitter 153. The instruction receiver 152 of the server device 150 receives an instruction specifying the identification ID of the cutting machine, from the connected operation terminals 160. The instruction transmitter 153 of the server device 150 transmits the instruction received by the instruction receiver 152, to the intermediary computer 120.

In the management system 100 for a cutting machine, since each of the cutting machines 10A through 10C connected to the intermediary computer 120 is identified by the identification IDs generated by the intermediary computer 120, the intermediary computer 120 enables the cutting machines 10A through 10C to be treated as if the cutting machines 10A through 10C have addresses on the Internet. Thus, even an instruction is issued from the operation terminal 160 connected to the server device 150 through the network can be transmitted to a specified cutting machine through the server device 150 and the intermediary computer 120 connected to the server device 150 through the network, as long as the instruction specifies the identification ID. Accordingly, even a cutting machine having no network connecting function, such as the cutting machines 10A through 10C described in this preferred embodiment as an example, can be managed by using the network. With a conventional technique, existing cutting machines having no network connecting function and cutting machines having no network connecting function in order to avoid a cost increase have not been targets of management using network. The management system 100 for a cutting machine according to this preferred embodiment can manage cutting machines having no network connecting function by using a network.

In this preferred embodiment, the server device 150 is configured to be connectable to the one or more operation terminals 160 through the Internet. This configuration is convenient because the operation terminals 160 at any location can be connected to the server device 150 as long as the operation terminals 160 are in an Internet connection environment. In addition, in this preferred embodiment, the intermediary computer 120 is connected to the server device 150 through the Internet. This configuration is convenient because the intermediary computer 120 and the cutting machines can be moved as long as the intermediary computer 120 and the cutting machines are located in an internet connection environment.

Further, in this preferred embodiment, the intermediary computer 120 includes the identifier transmitter 122 for transmitting an identification ID generated in the identifier generator 121 to the server device 150, and the server device 150 includes the register 151 for registering the identification ID transmitted from the identifier transmitter 122. The instruction receiver 152 of the server device 150 accepts an instruction if an identification ID specified by the operation terminals 160 coincides with one of identification IDs registered in the register 151. With this configuration, since the identification IDs of the cutting machines are registered in the server device 150, even if the intermediary computers 120 are changed or the cutting machine is connected to another intermediary computer 120, for example, the same operation can still be performed.

Moreover, in this preferred embodiment, every when the intermediary computer 120 is connected to a cutting machine, the intermediary computer 120 generates a client corresponding to this cutting machine. The identification ID is based on machine information acquired from the cutting machine at each connection. Thus, even when the intermediary computer 120 is changed to another intermediary computer 120, this intermediary computer 120 does not need to be set again.

In this preferred embodiment, the identification IDs are generated based on model information and product number information of cutting machines. Each of one or more cutting machines connected to the intermediary computer 120 stores model information and product number information. The identifier generator 121 of the intermediary computer 120 includes the acquirer 121a for acquiring model information and product number information from each cutting machine, and the generator 121b for generating an identification ID of each cutting machine based on the model information and the product number information acquired by the acquirer 121a. With this configuration, the identification ID capable of uniquely identifying each cutting machine can be generated.

Furthermore, the management system 100 for a cutting machine according to this preferred embodiment includes the shooting system 110, and a state of each cutting machine can be determined with an image. In this preferred embodiment, the shooting system 110 is connected to the intermediary computer 120, and configured to capture images of the cutting machines 10A through 10C. The server device 150 includes the shooting instruction receiver 154 for receiving a shooting instruction from the operation terminal 160 connected to the server device 150, and the shooting instruction transmitter 155 for transmitting the shooting instruction received by the shooting instruction receiver 154 to the intermediary computer 120. The shooting instruction specifies an identification ID of the cutting machine, and instructs to capture an image of the cutting machine corresponding to the specified identification ID. The intermediary computer 120 includes the shooting instruction receiver 128 for receiving the shooting instruction from the server device 150, and the shooting instruction transmitter 129 for transmitting the shooting instruction received by the shooting instruction receiver 128 to the shooting system 110. In this manner, the states of the cutting machines 10A through 10C can be determined with images so that the states of the cutting machines can be well known even in remote control.

The management system for a cutting machine according to one preferred embodiment has been described. The foregoing preferred embodiment is merely a preferred example, and is not intended to limit the management system for a cutting machine disclosed here. For example, in the preferred embodiment described above, the server device 150 is a server device in the cloud computing system 140, but may be any server device accessible by an operation terminal connected to a network. The network connecting the server device and the operation terminals, and the network connecting the server device and the intermediary computer may not be the Internet. One or both of these networks may be an original network disconnected from the Internet.

The functions of the remote control described in the above preferred embodiment is an example, and is not limited to implementation by remote control.

## Claims

1. A management system for a cutting machine (10A, 10B, 10C), the management system comprising:
a server device (150) configured to be connectable to one or more operation terminals (160) through a network (201); and
an intermediary device (120) connected to the server device (150) through the network (201) and directly connected to one or more cutting machines (10A, 10B, 10C), **characterized in that**:
the intermediary device (120) includes
an identifier generator (121) for acquiring machine information from each of the one or more cutting machines (10A, 10B, 10C) connected to the intermediary device (120), and adapted to generate an identifier of the cutting machine (10A, 10B, 10C) based on the acquired machine information,
a first receiver (124) for receiving an instruction from the server device (150), and
a first transmitter (125) for transmitting the instruction received by the first receiver (124) to the cutting machine (10A, 10B, 10C),
a client generator (123) for generating, for each of the one or more cutting machines (10A, 10B, 10C) connected to the intermediary device (120), a client including the first receiver and the first transmitter, and
the server device (150) includes
a second receiver (152) for receiving an instruction specifying the identifier of the cutting machine (10A, 10B, 10C) from one of the one or more operation terminals (160) connected to the server device (150), and
a second transmitter (153) for transmitting the instruction received by the second receiver (152) to the intermediary device (120), wherein
the first transmitter (125) is configured to transmit the instruction received by the first receiver (124) to one of the one or more cutting machines (10A, 10B, 10C) corresponding to the identifier specified by the instruction, and
every time when each of the one or more cutting machines (10A, 10B, 10C) is connected to the intermediary device (120), the client generator (123) is configured to generate a client of the cutting machine (10A, 10B, 10C) connected to the intermediary device (120).

2. The management system according to claim 1, wherein
the server device (150) is configured to be connectable to the one or more operation terminals (160) through Internet.

3. The management system according to claim 1 or 2, wherein
the intermediary device (120) is connected to the server device (150) through Internet.

4. The management system according to any one of claims 1 to 3, wherein
the intermediary device (120) includes an identifier transmitter (122) for transmitting the identifier generated by the identifier generator (121) to the server device (150),
the server device (150) includes a register (151) for registering the identifier transmitted by the identifier transmitter (122), and
the second receiver (152) is configured to accept an instruction if the identifier specified by one of the one or more operation terminals (160) coincides with one of identifiers registered in the register (151).

5. The management system according to any one of claims 1 to 4, wherein
each of the one or more cutting machines (10A, 10B, 10C) stores model information and product number information, as machine information, and
the identifier generator (121) includes
an acquirer (121a) for acquiring model information and product number information from each of the one or more cutting machines (10A, 10B, 10C), and
a generator (121b) for generating an identifier of each of the one or more cutting machines (10A, 10B, 10C) based on the model information and the product number information acquired by the acquirer (121a).

6. The management system according to any one of claims 1 to 5, comprising a shooting device (110) connected to the intermediary device (120) and configured to capture an image of at least one of the one or more cutting machines (10A, 10B, 10C), wherein the server device (150) includes
a first shooting instruction receiver (154) for receiving, from one of the one or more operation terminals (160) connected to the server device (150), a shooting instruction specifying an identifier of one of the one or more cutting machines (10A, 10B, 10C) and instructing to capture an image of one of the one or more cutting machines (10A, 10B, 10C) corresponding to the specified identifier, and
a first shooting instruction transmitter (155) for transmitting the shooting instruction received by the first shooting instruction receiver (154) to the intermediary device (120), and
the intermediary device (120) includes
a second shooting instruction receiver (128) for receiving the shooting instruction from the server device (120), and
a second shooting instruction transmitter (129) for transmitting the shooting instruction received by the second shooting instruction receiver (128) to the shooting device (110).

7. The management system according to any one of claims 1 to 6, wherein
each of the client is an imaginary intermediator linked to the identifier of the corresponding cutting machine (10A, 10B, 10C) and used for transmission between the server device (150) and the corresponding cutting machine (10A, 10B, 10C).

8. The management system according to any one of claims 1 to 7, wherein
the identifier generator (121) is configured to acquire cutting machine information, when first connected to each of the one or more cutting machines (10A, 10B, 10C), from each of the one or more cutting machines (10A,10B, 10C) connected to the intermediary device (120), and generates the identifier of the cutting machine (10A, 10B, 10C) based on the acquired machine information,
the intermediary device (120) includes an identifier transmitter (122) for transmitting the identifier generated by the identifier generator (121) to the server device (150), and
the server device (150) includes a register (151) for registering the identifier transmitted by the identifier transmitter (122).

## Patentansprüche

1. Verwaltungssystem für eine Schneidemaschine (10A, 10B, 10C), wobei das Verwaltungssystem umfasst:
eine Servervorrichtung (150) mit Konfigurierung dafür, mit einem oder mehreren Betriebsendgeräten (160) durch ein Netzwerk (201) verbindbar zu sein; und
eine Vermittlungsvorrichtung (120), die mit der Servervorrichtung (150) durch das Netzwerk (201) verbunden ist und mit einer oder mehreren Schneidemaschinen (10A, 10B, 10C) direkt verbunden ist,
**dadurch gekennzeichnet, dass**
die Vermittlungsvorrichtung (120) beinhaltet:
einen Kennungsgenerator (121) zum Beziehen von Maschineninformation von jeder der einen oder der mehreren Schneidemaschinen (10A, 10B, 10C), die mit der Vermittlungsvorrichtung (120) verbunden sind, und mit Ausgestaltung zum Generieren einer Kennung der Schneidemaschine (10A, 10B, 10C) auf Grundlage der bezogenen Maschineninformation,
einen ersten Empfänger (124) zum Empfangen einer Anweisung von der Servervorrichtung (150), und
einen ersten Sender (125) zum Senden der Anweisung, die von dem ersten Empfänger (124) empfangen wird, an die Schneidemaschine (10A, 10B, 10C),
einen Clientgenerator (123) zum für jede der einen oder der mehreren Schneidemaschinen (10A, 10B, 10C), die mit der Vermittlungsvorrichtung (120) verbunden sind, erfolgenden Generieren eines Clients, der den ersten Empfänger und den ersten Sender beinhaltet, und
die Servervorrichtung (150) beinhaltet:
einen zweiten Empfänger (152) zum Empfangen einer Anweisung zum Spezifizieren der Kennung der Schneidemaschine (10A, 10B, 10C) von einem des einen oder der mehreren Betriebsendgeräte (160), die mit der Servervorrichtung (150) verbunden sind, und
einen zweiten Sender (153) zum Senden der Anweisung, die von dem zweiten Empfänger (152) empfangen wird, an die Vermittlungsvorrichtung (120), wobei
der erste Sender (125) eine Konfigurierung aufweist zum Senden der Anweisung, die von dem ersten Empfänger (124) empfangen wird, an eine der einen oder der mehreren Schneidemaschinen (10A, 10B, 10C) entsprechend der Kennung, die durch die Anweisung spezifiziert wird, und
immer dann, wenn jede der einen oder der mehreren Schneidemaschinen (10A, 10B, 10C) mit der Vermittlungsvorrichtung (120) verbunden ist, der Clientgenerator (123) eine Konfigurierung aufweist zum Generieren eines Clients der Schneidemaschine (10A, 10B, 10C), die mit der Vermittlungsvorrichtung (120) verbunden ist.

2. Verwaltungssystem nach Anspruch 1, wobei
die Servervorrichtung (150) eine Konfigurierung dafür aufweist, mit der einen oder den mehreren Betriebsendgeräten (160) durch das Internet verbindbar zu sein.

3. Verwaltungssystem nach Anspruch 1 oder 2, wobei
die Vermittlungsvorrichtung (120) mit der Servervorrichtung (150) durch das Internet verbunden wird.

4. Verwaltungssystem nach einem der Ansprüche 1 bis 3, wobei
die Vermittlungsvorrichtung (120) beinhaltet: einen Kennungssender (122) zum Senden der Kennung, die von dem Kennungsgenerator (121) generiert wird, an die Servervorrichtung (150),
die Servervorrichtung (150) beinhaltet: ein Register (151) zum Registrieren der Kennung, die von dem Kennungssender (122) gesendet wird, und
der zweite Empfänger (152) eine Konfigurierung aufweist zum Annehmen einer Anweisung, wenn die Kennung, die von einem des einen oder der mehreren Betriebsendgeräte (160) spezifiziert wird, mit einer der Kennungen, die in dem Register (151) registriert sind, übereinstimmt.

5. Verwaltungssystem nach einem der Ansprüche 1 bis 4, wobei jede der einen oder der mehreren Schneidemaschinen (10A, 10B, 10C) Modellinformation und Produktnummerinformation als Maschineninformation speichert, und der Kennungsgenerator (121) beinhaltet:
einen Bezieher (121a) zum Beziehen von Modellinformation und Produktnummerinformation von jeder der einen oder der mehreren Schneidemaschinen (10A, 10B, 10C), und
einen Generator (121b) zum Generieren einer Kennung einer jeden der einen oder der mehreren Schneidemaschinen (10A, 10B, 10C) auf Grundlage der Modellinformation und der Produktnummerinformation, die von dem Bezieher (121a) bezogen werden.

6. Verwaltungssystem nach einem der Ansprüche 1 bis 5, umfassend:
eine Aufnahmevorrichtung (110), die mit der Vermittlungsvorrichtung (120) verbunden ist und eine Konfigurierung aufweist zum Machen eines Bildes wenigstens einer der einen oder der mehreren Schneidemaschinen (10A, 10B, 10C) wobei die Servervorrichtung (150) beinhaltet:
einen ersten Aufnahmeanweisungsempfänger (154) zum von einem des einen oder der mehreren Betriebsendgeräte (160), die mit der Servervorrichtung (150) verbunden sind, erfolgenden Empfangen einer Aufnahmeanweisung zum Spezifizieren einer Kennung einer der einen oder der mehreren Schneidemaschinen (10A, 10B, 10C) und Anweisen des Machens eines Bildes einer der einen oder der mehreren Schneidemaschinen (10A, 10B, 10C) entsprechend der spezifizierten Kennung, und
einen ersten Aufnahmeanweisungssender (155) zum Senden der Aufnahmeanweisung, die von dem ersten Aufnahmeanweisungsempfänger (154) empfangen wird, an die Vermittlungsvorrichtung (120), und
die Vermittlungsvorrichtung (120) beinhaltet:
einen zweiten Aufnahmeanweisungsempfänger (128) zum Empfangen der Aufnahmeanweisung von der Servervorrichtung (120), und
einen zweiten Aufnahmeanweisungssender (129) zum Senden der Aufnahmeanweisung, die von dem zweiten Aufnahmeanweisungsempfänger (128) empfangen wird, an die Aufnahmevorrichtung (110).

7. Verwaltungssystem nach einem der Ansprüche 1 bis 6, wobei
jeder Client ein imaginärer Vermittler ist, der mit der Kennung der entsprechenden Schneidemaschine (10A, 10B, 10C) gekoppelt ist und zum Senden zwischen der Servervorrichtung (150) und der entsprechenden Schneidemaschine (10A, 10B, 10C) verwendet wird.

8. Verwaltungssystem nach einem der Ansprüche 1 bis 7, wobei
der Kennungsgenerator (121) eine Konfigurierung aufweist zum beim erstmaligen Verbinden mit jeder der einen oder der mehreren Schneidemaschinen (10A, 10B, 10C) erfolgenden Beziehen einer Schneidemaschineninformation von jeder der einen oder der mehreren Schneidemaschinen (10A, 10B, 10C), die mit der Vermittlungsvorrichtung (120) verbunden sind, und Generieren der Kennung der Schneidemaschine (10A, 10B, 10C) auf Grundlage der bezogenen Maschineninformation, wobei
die Vermittlungsvorrichtung (120) beinhaltet: einen Kennungssender (122) zum Senden der Kennung, die von dem Kennungsgenerator (121) generiert wird, an die Servervorrichtung (150), und
die Servervorrichtung (150) beinhaltet: ein Register (151) zum Registrieren der Kennung, die von dem Kennungssender (122) gesendet wird.

## Revendications

1. Système de gestion pour une machine de coupe (10A, 10B, 10C), le système de gestion comprenant :
un dispositif serveur (150) configuré pour être connectable à un ou plusieurs terminaux de fonctionnement (160) via un réseau (201) ; et
un dispositif intermédiaire (120) connecté au dispositif serveur (150) via le réseau (201) et directement connecté à une ou plusieurs machines de coupe (10A, 10B, 10C), **caractérisé en ce que :**
le dispositif intermédiaire (120) inclut
un générateur d'identificateur (121) pour acquérir des informations de machine de chacune de l'une ou plusieurs machines de coupe (10A, 10B, 10C) connectées au dispositif intermédiaire (120), et adapté pour générer un identificateur de la machine de coupe (10A, 10B, 10C) selon les informations de machine acquises,
un premier récepteur (124) pour recevoir une instruction du dispositif de serveur (150), et
un premier émetteur (125) pour transmettre l'instruction reçue par le premier récepteur (124) à la machine de coupe (10A, 10B, 10C),
un générateur de client (123) pour générer, pour chacune de l'une ou plusieurs machines de coupe (10A, 10B, 10C) connectées au dispositif intermédiaire (120), un client incluant le premier récepteur et le premier émetteur, et
le dispositif serveur (150) inclut
un deuxième récepteur (152) pour recevoir une instruction spécifiant l'identificateur de la machine de coupe (10A, 10B, 10C) d'un de l'un ou plusieurs terminaux de fonctionnement (160) connectés au dispositif serveur (150), et
un deuxième émetteur (153) pour transmettre l'instruction reçue par le deuxième récepteur (152) au dispositif intermédiaire (120), dans lequel
le premier émetteur (125) est configuré pour transmettre l'instruction reçue par le premier récepteur (124) à une de l'une ou plusieurs machines de coupe (10A, 10B, 10C) correspondant à l'identificateur spécifié par l'instruction, et
à chaque fois que chacune de l'une ou plusieurs machines de coupe (10A, 10B, 10C) est connectée au dispositif intermédiaire (120), le générateur de client (123) est configuré pour générer un client de la machine de coupe (10A, 10B, 10C) connecté au dispositif intermédiaire (120) .

2. Le système de gestion selon la revendication 1, dans lequel
le dispositif serveur (150) est configuré pour être connectable à l'un ou plusieurs terminaux de fonctionnement (160) via Internet.

3. Le système de gestion selon la revendication 1 ou 2, dans lequel
le dispositif intermédiaire (120) est connecté au dispositif serveur (150) via Internet.

4. Le système de gestion selon l'une quelconque des revendications 1 à 3, dans lequel
le dispositif intermédiaire (120) inclut un émetteur d'identificateur (122) pour transmettre l'identificateur généré par le générateur d'identificateur 121) au dispositif serveur (150),
le dispositif serveur (150) inclut un registre (151) pour enregistrer l'identificateur transmis par l'émetteur d'identificateur (122), et
le deuxième récepteur (152) est configuré pour accepter une instruction si l'identificateur spécifié par un de l'un ou plusieurs terminaux de fonctionnement (160) coïncide avec un des identificateurs enregistrés dans le registrer (151).

5. Le système de gestion selon l'une quelconque des revendications 1 à 4, dans lequel
chacune de l'une ou plusieurs machines de coupe (10A, 10B, 10C) stocke des informations de modèle et des informations de numéro de produit, en tant qu'informations de machine, et
le générateur d'identificateur (121) inclut
un acquéreur (121a) pour acquérir des informations de modèle et des informations de numéro de produit auprès de chacune de l'une ou plusieurs machines de coupe (10A, 10B, 10C), et
un générateur (121b) pour générer un identificateur de chacune de l'une ou plusieurs machines de coupe (10A, 10B, 10C) selon les informations de modèle et les informations de numéro de produit acquises par l'acquéreur (121a).

6. Le système de gestion selon l'une quelconque des revendications 1 à 5, comprenant
un dispositif photographique (110) connecté au dispositif intermédiaire (120) et configuré pour capturer une image d'au moins une de l'une ou plusieurs machines de coupe (10A, 10B, 10C), dans lequel le dispositif serveur (150) inclut
un premier récepteur d'instruction photographique (154) pour recevoir, d'un de l'un ou plusieurs terminaux de fonctionnement (160) connectés au dispositif serveur (150), une instruction photographique spécifiant un identificateur d'une de l'une ou plusieurs machines de coupe (10A, 10B, 10C) et instruisant de capturer une image d'une de l'une ou plusieurs machines de coupe (10A, 10B, 10C) correspondant à l'identificateur spécifié, et
un premier émetteur d'instruction photographique (155) pour transmettre l'instruction photographique reçue par le premier récepteur d'instruction photographique (154) au dispositif intermédiaire (120), et
le dispositif intermédiaire (120) inclut
un deuxième récepteur d'instruction photographique (128) pour recevoir l'instruction photographique du dispositif serveur (120), et
un deuxième émetteur d'instruction photographique (129) pour transmettre l'instruction photographique reçue par le deuxième récepteur d'instruction photographique (128) au dispositif photographique (110).

7. Le système de gestion selon l'une quelconque des revendications 1 à 6, dans lequel
chacun du client est un intermédiaire imaginaire lié à l'identificateur de la machine de coupe correspondante (10A, 10B, 10C) et utilisé pour une transmission entre le dispositif serveur (150) et la machine de coupe correspondante (10A, 10B, 10C).

8. Le système de gestion selon l'une quelconque des revendications 1 à 7, dans lequel
le générateur d'identificateur (121) est configuré pour acquérir des informations de machine de coupe, lors d'une première connexion à chacune de l'une ou plusieurs machines de coupe (10A, 10B, 10C), auprès de chacune de l'une ou plusieurs machines de coupe (10A, 10B, 10C) connectées au dispositif intermédiaire (120), et génère l'identificateur de la machine de coupe (10A, 10B, 10C) selon les informations de machine acquises,
le dispositif intermédiaire (120) inclut un émetteur d'identificateur (122) pour transmettre l'identificateur généré par le générateur d'identificateur (121) au dispositif serveur (150), et
le dispositif serveur (150) inclut un registre (151) pour enregistrer l'identificateur transmis par l'émetteur d'identificateur (122).
